(19) Europäisches Patentamt / European Patent Office / Office européen des brevets

(11) **EP 2 163 574 B1**

(12) **EUROPEAN PATENT SPECIFICATION**

(45) Date of publication and mention
of the grant of the patent:
**12.08.2015 Bulletin 2015/33**

(51) Int Cl.:
*C08J 9/00* (2006.01)   *C08J 9/18* (2006.01)
*C08J 9/232* (2006.01)   *C08L 23/02* (2006.01)

(21) Application number: **08776963.4**

(86) International application number:
**PCT/JP2008/059901**

(22) Date of filing: **29.05.2008**

(87) International publication number:
**WO 2009/001645 (31.12.2008 Gazette 2009/01)**

(54) **POLYOLEFIN RESIN PRE-FOAMED PARTICLE HAVING ANTISTATIC PROPERTY, AND MOLDED ARTICLE PRODUCED FROM THE PARTICLE**

VORGESCHÄUMTE POLYOLEFINHARZPARTIKEL MIT ANTISTATISCHER EIGENSCHAFT UND AUS DER PARTIKEL HERGESTELLTER FORMARTIKEL

PARTICULE PRÉEXPANSÉE DE RÉSINE DE POLYOLÉFINE PRÉSENTANT DES PROPRIÉTÉS ANTISTATIQUES ET ARTICLE MOULÉ PRODUIT À PARTIR DE LA PARTICULE

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **22.06.2007 JP 2007165174**

(43) Date of publication of application:
**17.03.2010 Bulletin 2010/11**

(73) Proprietor: **KANEKA CORPORATION**
**Osaka (JP)**

(72) Inventors:
• **MIURA, Shintaro**
  **Settsu-shi**
  **Osaka 566-0072 (JP)**
• **SHIBATA, Tetsuya**
  **Settsu-shi**
  **Osaka 566-0072 (JP)**

(74) Representative: **Hart-Davis, Jason et al**
**Cabinet Beau de Loménie**
**158, rue de l'Université**
**75340 Paris Cedex 07 (FR)**

(56) References cited:
**WO-A1-2008/075503**   **JP-A- 07 330 942**
**JP-A- 08 012 798**   **JP-A- 10 506 935**
**JP-A- 2004 010 648**   **JP-A- 2004 155 850**
**JP-A- 2006 117 739**

• **DATABASE WPI Week 200430 Thomson Scientific, London, GB; AN 2004-319923 XP002660293, & JP 2004 010648 A (DAICEL CHEM IND LTD) 15 January 2004 (2004-01-15)**
• **DATABASE WPI Week 200103 Thomson Scientific, London, GB; AN 2001-019758 XP002660294, & JP 2000 290421 A (KANEKA CORP) 17 October 2000 (2000-10-17)**

**EP 2 163 574 B1**

**Description**

TECHNICAL FIELD

The present invention relates to polyolefin resin pre-expanded particles having antistatic property and a molded article produced from the particles.

BACKGROUND ART

An expansion-molded article composed of polyolefin resin pre-expanded particles is excellent in cushioning properties, heat resistance and chemical resistance and is used as cushioning packaging materials for general mechanical components and precision mechanical components. However, a polyolefin-based resin is also excellent in electrical insulating properties by its nature and is easily charged with electricity by friction. As a result, there arises a problem that dusts are likely to adhere to the expansion-molded article, and thus, dusts adhere to mechanical components to be encased in or packed with the expansion-molded article, and also precision mechanical components are damaged by electrostatic discharge. An expansion-molded article composed of polyolefin resin pre-expanded particles having antistatic properties has been developed so as to solve such a problem.

As a general method of imparting antistatic properties to expanded particles, a method of producing a molded article from pre-expanded particles of a polyolefin resin kneaded with a low-molecular type antistatic agent such as a surfactant is known (Patent Document 1).

However, according to the above-described method, there arises a problem that the low-molecular type antistatic agent may sometimes bleed out on a surface of the expansion-molded article, and thus, the antistatic agent is easily removed by friction or washing with water and electrostatic properties deteriorate with the lapse of time, and also the antistatic agent adheres to an article to be packed thereby causing contamination of the article to be packed.

Patent Document 2 discloses, as the method of solving the above problem, a method in which both a surfactant and a hydrophilic polymer are added to a polyolefin-based resin and the polyolefin-based resin is formed into pre-expanded particles, and thus, the surfactant is trapped by the hydrophilic polymer thereby suppressing bleeding out of the surfactant. According to the document, it becomes possible to prevent contamination of the article to be packed and to obtain polyolefin resin pre-expanded particles having antistatic properties with improved durability.

However, olefin-resin pre-expanded particles are usually obtained from olefin-based resin particles through a step of heating polyolefin-based resin particles and an aqueous dispersion medium at a temperature of a softening temperature or higher under a pressure, and releasing the polyolefin-based resin particles and the aqueous dispersion medium under atmosphere of a pressure lower than that of a sealed vessel. According to the methods of Patent Documents 1 and 2 in which the olefin-based resin particles contain a surfactant having antistatic properties, the surfactant contained in the olefin-based resin particles is sometimes eluted in the aqueous dispersion medium.

When the amount of the surfactant contained in the aqueous dispersion medium increases excessively, bubble cells are likely to be generated in the aqueous dispersion medium, resulting in an unstable dispersed state of the olefin-based resin particles. Accordingly, resin particles are removed from the dispersion medium by bubble cells generated in a pressure vessel and undergo specific heat history, and the amount of unexpanded resin particles increases. Therefore, it may become difficult to efficiently obtain pre-expanded particles having antistatic properties, resulting in low productivity of pre-expanded particles.

Also, functional polyolefin-based resin expanded particles, in which an adhesive resin comprising a modifier such as an antistatic agent is fixed on a surface of polyolefin-based resin expanded particles, is disclosed (Patent Document 3). However, according to this method, it is necessary to melt-coat a surface of the polyolefin-based resin expanded particles with the adhesive resin comprising a modifier. Therefore, an additional processing step of the melt coat is required, which leads to an increase in cost to be productive, to control production and for facilities.

Patent Document 1: Japanese Unexamined Patent Publication (JP-A) No. 10-219019
Patent Document 2: JP-A No. 2000-290421
Patent Document 3: JP-A No. 2002-3634

DISCLOSURE OF THE INVENTION

PROBLEMS TO BE SOLVED BY THE INVENTION

Thus, an objective of the present invention is to provide polyolefin resin pre-expanded particles having antistatic property, and a molded article obtained by heat-fusing the polyolefin resin pre-expanded particles.

MEANS FOR SOLVING THE PROBLEMS

The present inventors have intensively studied in light of the prior arts described above so as to achieve the objective, and thus, the present invention has been completed. According to the present invention, it became possible to achieve the objective by decreasing the amount of a low-molecular type antistatic agent and using a polyolefin-based resin comprising a specific polymer type antistatic agent as a base resin of pre-expanded particles.

That is, the first aspect of the present invention relates to polyolefin resin pre-expanded particles produced by expanding polyolefin-based resin particles, which are obtained from a polyolefin-based resin composition comprising 100 parts by weight of a polyolefin-based resin, less than 0.01 part by weight of a low-molecular type antistatic agent, and 5 parts by weight or more and 30 parts by weight or less of a polyether-polyolefin resin block copolymer-based antistatic agent.

The polyolefin resin pre-expanded particles can be polyolefin resin pre-expanded particles obtained from a polyolefin-based resin composition, wherein

(1) a low-molecular type antistatic agent is not substantially contained;
(2) the polyolefin-based resin is a polypropylene-based resin; and
(3) the polyether-polyolefin resin block copolymer-based antistatic agent is a polyether-polypropylene-based resin block copolymer.

The second aspect of the present invention relates to a molded article obtained by heat-fusing the polyolefin resin pre-expanded particles.

EFFECT OF THE INVENTION

The antistatic polyolefin resin pre-expanded particles of the present invention exhibits a satisfactory expansion ratio in spite of having excellent antistatic properties and comprising an antistatic agent.

According to the method for producing polyolefin resin pre-expanded particles of the present invention, since little foaming occurs when dispersed in an aqueous dispersion medium, it becomes possible to stably disperse and productivity of antistatic polyolefin resin pre-expanded particles is improved when compared with the prior art.

BEST MODE FOR CARRYING OUT THE INVENTION

The antistatic polyolefin resin pre-expanded particles of the present invention is antistatic polyolefin resin pre-expanded particles produced by expanding resin particles which are formed from a polyolefin-based resin composition comprising 100 parts by weight of a polyolefin-based resin, less than 0.01 part by weight of a low-molecular type antistatic agent, and 5 to 30 parts by weight or less of a polyether-polyolefin resin block copolymer-based antistatic agent.

As the resin in the polyolefin-based resin composition constituting the polyolefin resin pre-expanded particles in the present invention, for example, a resin produced by polymerizing an $\alpha$-olefin such as ethylene, propylene or butene is used with a Ziegler catalyst, a metallocene catalyst, or a post-metallocene catalyst, or the like. Specific examples of the resin include polypropylene-based resins such as polypropylene, an ethylene-propylene random copolymer, a propylene-butene random copolymer, an ethylene-propylene block copolymer, and an ethylene-propylene-butene terpolymer; and polyethylene-based resins such as low-density polyethylene, middle-density polyethylene, linear low-density polyethylene, high-density polyethylene, an ethylene-vinyl acetate copolymer, an ethylene-methyl methacrylate copolymer and an ionomer resin. These polyolefin-based resins can be used alone or in combination. Among these polyolefin-based resins, non-crosslinked resins are preferably used, and also crosslinked resins can be used.

Among these polyolefin-based resins, polypropylene resins containing 50% by mol or more of a propylene unit, ethylene-propylene random copolymer, propylene-butene random copolymer, ethylene-propylene block copolymer and ethylene-propylene-butene terpolymer are preferred.

The polypropylene-based resins preferably have a melting point of 130°C or higher and 155°C or lower, and more preferably 135°C or higher and 150°C or lower. When the melting point is within the above range, a thermal molding pressure does not become too high and a proper molding pressure tends to be attained. Herein, a melting point is measured by the method specified in JIS K7121 (2006). A pre-treatment is performed under the conditions of conditioning (2) of a specimen of JIS K7121 (provided that a cooling rate is 10°C/min) and the temperature is raised at a rate of 10°C/min to obtain a melting peak. The temperature at the top of the obtained melting peak is defined as a melting point. When two or more melting peaks appear, the temperature at the top of a melting peak having the largest area is defined as the melting point.

A melt flow rate (MFR) measured in accordance with JIS K7210 of the polypropylene-based resins is preferably 3 g/10 min or more and 30 g/10 min or less, and more preferably 5 g/10 min or more and 20 g/10 min or less. Herein, the melt flow rate was measured using an MFR measuring instrument described in JIS K7210 under the conditions of an orifice diameter of $2.0959\pm0.005$ mm$\varphi$, an orifice length of $8.000\pm0.025$ mm, a load of 2,160 g and a temperature of $230\pm0.2$°C.

The polyolefin-based resin of the present invention can be mixed with conventional compounding agents, for example, antioxidants, ultraviolet absorbers, colorants such as dyes and pigments, plasticizers, lubricants, crystal nucleating agents, talc, and inorganic fillers such as calcium carbonate to give a composition. When it is necessary to adjust a bubble cell diameter of pre-expanded particles, a foam stabilizer may be sometimes added to a polyolefin-based resin. Examples of the foam stabilizer include inorganic nucleating agents such as talc, silica, calcium silicate, calcium carbonate, aluminum oxide, titanium oxide, diatomaceous earth, clay, sodium bicarbonate, alumina, barium sulfate, aluminum oxide, bentonite and zinc borate. The used amount of the foam stabilizer is usually from 0.005 to 2 parts by weight based on 100 parts by weight of the polyolefin-based resin.

The antistatic agent in the present invention refers to those having antistatic properties. Specifically, the antistatic agent is preferably a material in which a surface specific resistance value of an injection molded plate formed by using the antistatic agent alone, measured under the atmosphere of 23°C and a humidity of 50% in accordance with ASTM D257 using a super insulation meter, is $1 \times 10^{12}$ $\Omega$ or less.

Specific examples of the polyether-polyolefin-based block copolymer-based antistatic agent in the present invention include block copolymers in which a polyethylene moiety composed of polyethylene glycol and polypropylene glycol and a polyolefin moiety composed of polyethylene and polypropylene are alternately bonded.

In the polyether-polyolefin-based block copolymer-based antistatic agent, the amount of polyether is from 20 to 90% by weight, preferably from 25 to 90% by weight, and particularly preferably from 30 to 70% by weight, based on the weight of the entire copolymer.

A number average molecular weight (Mn) of the polyether-polyolefin-based block copolymer, measured by a gel permeation chromatography method, is preferably from 2,000 to 60,000, and more preferably from 5,000 to 40,000. Herein, measuring conditions of the number average molecular weight are as follows: analyzer: high temperature gel permeation chromatography (GPC), solvent: ortho-chlorobenzene, sample concentration: 3 mg/mL, column temperature: 135°C, and standard sample: polystyrene. When the number average molecular weight measured under these conditions is within the above range, it shows satisfactory antistatic properties and it's dispersion in a polyolefin-based resin is improved.

Examples of the polyether-polyolefin-based block copolymer-based antistatic agent include, but are not limited to, "Pellestat 300", "Pellestat 230" and "Pellestat 303" manufactured by Sanyo Chemical Industries, Ltd.

The used amount of the polyether-polyolefin-based block copolymer-based antistatic agent is 5 parts by weight or more and 30 parts by weight or less, and preferably 10 parts by weight or more and 20 parts by weight or less, based on 100 parts by weight of the polyolefin-based resin. When the used amount of the polyether-polyolefin-based block copolymer-based antistatic agent is less than 5 parts by weight, excellent antistatic properties cannot be imparted to olefin-based resin pre-expanded particles. When the polyether-polyolefin-based block copolymer-based antistatic agent is added in the amount of more than 30 parts by weight, antistatic property corresponding to the amount of addition cannot be obtained.

The low-molecular type antistatic agent in the present invention refers to an antistatic agent having a number average molecular weight of 1,500 or less, and specific examples thereof include surfactants. Examples of the surfactants include nonionic surfactants such as mono-, di- or tri-glycerin ester of fatty acid, alkylmono- or diethanolamine, alkylmono- or diethanolamide, and sorbitan fatty acid esters; and special cationic surfactants such as hydroxyalkyl monoethanolamine.

The used amount of the low-molecular type antistatic agent is less than 0.01 part by weight based on 100 parts by weight of the polyolefin-based resin. In view of dispersion stability, it is preferred that the low-molecular type antistatic agent is not substantially added. The expression "not substantially added" means that the amount to be intentionally added is 0 part by weight. When the amount is within the above range, dispersion stability upon dispersion of resin particles in an aqueous dispersion medium is improved.

The polyolefin-based resin composition of the present invention contains less than 0.01 part by weight of a low-molecular type antistatic agent and 5 to 30 parts by weight of a polyether-polyolefin resin block copolymer-based antistatic agent, based on 100 parts by weight of a polyolefin-based resin.

There is no limitation on the mixing order and mixing method of the polyolefin-based resin, the polyether-polyolefin resin block copolymer-based antistatic agent and the low-molecular type antistatic agent. Usually, polypropylene-based resin particles can be obtained by heat-melting and kneading the polyolefin-based resin, the polyether-polyolefin resin block copolymer-based antistatic agent, the low-molecular type antistatic agent and, if necessary, various compounding agents using an extruder, a kneader, a Banbury mixer or a roll, extruding the melt-kneaded mixture into a string thorough a spinneret having small holes, and cutting the string using a cutter equipped with a drawing device. The particle weight of the obtained polypropylene-based resin particles is preferably from 0.5 to 5.0 mg/particle. In such a way, the polypropylene-based resin particles are formed into resin particles having a shape such as column, cylindroid, sphere, cube or rectangular solid, which are easily used for pre-expansion in the present invention.

Next, a method for producing polyolefin resin pre-expanded particles of the present invention will be described.

The method for producing polyolefin resin pre-expanded particles of the present invention includes a step of dispersing polyolefin-based resin particles formed from a polyolefin-based resin composition comprising less than 0.01 part by weight of a low-molecular type antistatic agent, and 5 parts by weight or more and 30 parts by weight or less of a polyether-polyolefin resin block copolymer-based antistatic agent based on 100 parts by weight of a polyolefin-based resin in an aqueous dispersion medium, and expanding the polyolefin-based resin particles in the presence of a foaming agent.

Herein, polyolefin resin pre-expanded particles are preferably produced by dispersing polyolefin-based resin particles and a dispersant in an aqueous dispersion medium in a sealed vessel, introducing a foaming agent in the sealed vessel, heating them to the temperature higher than a softening temperature of a polyolefin-based resin, opening one end of the sealed vessel, releasing the polyolefin-based resin particles and the aqueous dispersion medium under atmosphere of a pressure lower than that of the hermetically sealed vessel, and expanding the polyolefin-based resin particles. The used amount of the dispersant is from 0.2 to 5 parts by weight based on 100 parts by weight of the polyolefin-based resin particles.

The aqueous dispersion medium in which polyolefin-based resin particles are dispersed may be a solvent which does not dissolve a polyolefin-based resin, and water or a mixture prepared by adding one, or two or more of ethylene glycol, glycerin, methanol and ethanol to water is used. In view of environment and economic efficiency, water is preferred. The used amount of the aqueous dispersion medium is from 100 to 500 parts by weight based on 100 parts by weight of the polyolefin-based resin particles.

As the dispersant, for example, inorganic substances such as calcium tertiary phosphate, calcium pyrophosphate, kaolin, basic magnesium carbonate and basic zinc carbonate; and anionic surfactants such as sodium dodecylbenzene sulfonate, sodium $\alpha$-olefinsulfonate and sodium normal paraffin sulfonate are used in combination.

In the present invention, the foaming agent is not particularly limited and known foaming agents such as volatile foaming agent, an inorganic gas and water can be used. The used amount of the volatile foaming agent is set taking the kind of the foaming agent and a ratio of the amount of the resin in the vessel and volume space inside the vessel into consideration, and thus, pre-expanded particles each having a different expansion ratio can be obtained.

Specific examples of the volatile foaming agent include aliphatic hydrocarbons such as propane, isobutane, normal butane, isopentane, normal pentane and hexane; alicyclic hydrocarbons such as cyclobutane, cyclopentane and cyclohexane; and halogenated hydrocarbons such as trichloromonofluoromethane, dichlorodifluoromethane, dichlorotetrafluoroethane and trichlorofluoroethane. These volatile foaming agents may be used alone, or two or more kinds of them may be used in combination.

The inorganic gas to be used is preferably carbon dioxide, nitrogen, air, or an inorganic gas containing the above inorganic gas as a main component and also containing a small amount of inert gas, steam, oxygen, hydrogen or ozone in view of economic efficiency, productivity, safety and environmental compatibility, and more preferably nitrogen or air because of its large effect of reducing variation in an expansion ratio.

The addition amount of the foaming agent varies depending on an expansion ratio of pre-expanded particles, a kind of the foaming agent, a kind of the polyolefin-based resin, a ratio of resin particles and the aqueous dispersion medium, and an impregnation or expansion temperature, and is preferably within the range from 5 to 50 parts by weight based on 100 parts by weight of the polyolefin-based resin particles.

The apparent expansion ratio of polyolefin resin pre-expanded particles is determined by measuring the weight (g) of pre-expanded particles, immersing the polyolefin resin pre-expanded particles in ethanol in a measuring cylinder and calculating the apparent expansion ratio by the following formula: 0.9 (resin density (g/mL) of resin)/(weight (g) of pre-expanded particles/volume (mL) of pre-expanded particles). Herein, the apparent expansion ratio of polyolefin resin pre-expanded particles is preferably from 5 to 40.

The polyolefin resin pre-expanded particles obtained by the above method are filled in a mold which can be closed but cannot be sealed hermetically. If necessary, the polyolefin resin pre-expanded particles were aged under pressurized air before filling in the mold. Next, the polyolefin resin pre-expanded particles are heat-fused with each other by steam introduced into a mold to produce a polyolefin-based resin in-mold expansion molded article having antistatic property.

When in-mold molding is performed, after measuring the weight of an in-mold molded article, the volume of the molded article is determined by a submergence method and an expansion ratio can be calculated by the following equation. Expansion ratio of in-mold molded article = 0.9 (resin density (g/mL) of resin) $\times$ (volume (mL) of in-mold molded article/weight (g) of in-mold molded article.

An in-mold molded article having a satisfactory expansion ratio can be obtained by using the polyolefin-based pre-expanded particles of the present invention.

The polyolefin-based in-mold expansion-molded article thus obtained has excellent antistatic properties, and therefore, it can be suited for use as cushioning packaging materials for OA machineries, precision machineries, or components of these machineries.

EXAMPLES

The present invention will be explained in more detail by way of examples, but the present invention is not limited to these examples. Parts and percentages are by weight unless otherwise specified.

(Dispersibility of polyolefin-based resin particles)

The weight of unexpanded resin particles remained in a pressure vessel after expansion was measured and dispersibility was evaluated by the following criteria.

○: The amount of unexpanded resin particles remained in a pressure vessel is less than 1% of the weight of the polyolefin-based resin charged.
△: The amount of unexpanded resin particles remained in a pressure vessel is 1% or more and less than 5% of the weight of the polyolefin-based resin charged.
×: The amount of unexpanded resin particles remained in a pressure vessel is 5% or more of the weight of the polyolefin-based resin charged.

(Apparent expansion ratio of pre-expanded article)

After measuring the weight (g) of pre-expanded particles, polyolefin resin pre-expanded particles were immersed in ethanol in a measuring cylinder and an apparent expansion ratio was calculated by the following equation.

```
Apparent expansion ratio of pre-expanded particles =
0.9 (resin density (g/mL) of resin)/(weight (g) of pre-
expanded particles/volume (mL) of pre-expanded particles)
```

(Expansion ratio of in-mold molded article)

After measuring the weight of an in-mold molded article, the volume of the molded article was determined by a submergence method and an expansion ratio was calculated 5 by the following equation.

```
Expansion ratio of in-mold molded article = 0.9
(resin density (g/mL) of resin) × (volume (mL) of in-mold
molded article/weight (g) of in-mold molded article.
```

(State of fusion)

An in-mold molded article was broken and the broken cross-section was evaluated by the following criteria.

○: A percentage of broken pre-expanded particles is 60% or more.

×: A percentage of broken pre-expanded particles is less than 60%.

(Appearance of molded article)

An in-mold molded article was evaluated by visual observation according to the following criteria.

○: Unevenness among surface particles is less, and surface smoothness is excellent.

△: Partial unevenness among surface particles is shown and surface smoothness is somewhat inferior.

×: Too much unevenness among surface particles is shown and surface smoothness is inferior.

(Surface specific resistance)

After storage of a molded article in a room at a temperature of 23°C and a humidity of 50% for 48 hours, surface specific resistance was measured by using an insulation resistance meter TR8601 manufactured by

ADVANTEST CORPORATION.

(Examples 1 to 2, Comparative Example 1)

A polyether-polypropylene block copolymer (manufactured by Sanyo Chemical Industries, Ltd., trade name "Pellestat 300") was used as a polyether-polyolefin resin block copolymer-based antistatic agent. These materials were mixed in an each amount shown in Table 1 based on 100 parts by weight of an ethylene-propylene random copolymer (manufactured by Prime Polymer Co.,Ltd, E317) having a density of 0.9 g/cm$^3$ and MFR of 7.0 g/10 min. The mixture was melt-kneaded using an extruder, and then, the melt-kneaded mixture was granulated to obtain polyolefin-based resin particles (1.2 mg/particle). In a pressure vessel, 300 parts by weight of water, 100 parts by weight of the obtained polyolefin-based resin particles, and 0.8 part by weight of calcium tertiary phosphate and 0.03 part by weight of sodium normal paraffin sulfonate as dispersants were charged and 12 parts by weight of isobutane as a foaming agent was added. After heating to a predetermined temperature under stirring, the pressure inside the vessel was adjusted and the water dispersion was released through an nozzle with small holes provided at the lower portion of the pressure vessel under atmospheric pressure thereby performing expansion to obtain polyolefin-based pre-expanded particles having an apparent expansion ratio of about 16 (16.1 and 16.0 in Examples 1 and 2, 16.1 in Comparative Example 1). The polyolefin-based pre-expanded particles were washed with water and then dried.
Next, the obtained polyolefin-based pre-expanded particles were charged in a 1 m$^3$ pressure vessel, pressurized to 0.9 MPa and then allowed to stand for 2 hours, thereby increasing the internal pressure of the polyolefin-based pre-expanded particles to 0.2 MPa. After filling a mold measuring 450 mm × 300 mm × 50 mm with the polyolefin-based pre-expanded particles, the pre-expanded particles were heat-fused by steam at 0.4 MPa to obtain an in-mold molded article. The obtained in-mold molded article was dried in a drying chamber at 75°C for 24 hours and aged, and then, an expansion ratio, the state of fusion and surface specific resistance of the in-mold molded article were evaluated. The results are shown in Table 1.

(Example 3)

In the same manner as in Example 1, except that a polyether-polypropylene block copolymer-based antistatic agent (manufactured by Sanyo Chemical Industries, Ltd., trade name "Pellestat 230") and hydroxyalkyl monoethanolamine (manufactured by MIYOSHI OIL & FAT CO., LTD., trade name "Dusper 125B", C12 alkyl and C14 alkyl exist in a ratio of 1:1, molecular weight: 285.3) as a low-molecular type antistatic agent were used as antistatic agents in each amount shown in Table 1, the operation was performed to obtain polyolefin resin pre-expanded particles and an in-mold molded article. The results are shown in Table 1. Herein, the obtained polyolefin resin pre-expanded particles showed an apparent expansion ratio of 16.7.

(Example 4)

A polyether-polyolefin block copolymer-based antistatic agent (manufactured by Sanyo Chemical Industries, Ltd., trade name "Pellestat 303") was used. These materials were mixed in each amount shown in Table 1 based on 100 parts by weight of an ethylene-propylene random copolymer having a density of 0.9 g/cm$^3$ and MFR of 7.0 g/10 min. The mixture was melt-kneaded using an extruder, and then, the melt-kneaded mixture was granulated to obtain polyolefin-based resin particles (1.2 mg/particle). In a pressure vessel, 400 parts by weight of water, 100 parts by weight of the obtained polyolefin-based resin particles, and 1.4 parts by weight of calcium tertiary phosphate and 0.035 part by weight of sodium normal paraffin sulfonate as dispersants were charged and 14 parts by weight of isobutane as a foaming agent was added. After heating to a predetermined temperature under stirring, the pressure inside the vessel was adjusted and the water dispersion was released through an nozzle with small holes provided at the lower portion of the pressure vessel under atmospheric pressure thereby performing expansion to obtain polyolefin-based pre-expanded particles having an apparent expansion ratio of about 19. The polyolefin-based pre-expanded particles were washed with water and then dried.
Next, the obtained polyolefin-based pre-expanded particles were charged in a 1 m$^3$ pressure vessel, pressurized to 0.4 MPa and then allowed to stand for 15 hours thereby increasing the internal pressure of the polyolefin-based pre-expanded particles to 0.2 MPa. After filling a mold measuring 400 mm $\times$ 300 mm $\times$ 12 mm with the polyolefin-based pre-expanded particles, the pre-expanded particles were heat-fused by steam at 0.3 MPa to obtain an in-mold molded article. The obtained in-mold molded article was dried in a drying chamber at 75°C for 24 hours and aged, and then, an expansion ratio, state of fusion and surface specific resistance of the in-mold molded article were evaluated.

The results are shown in Table 1.

(Example 5)

After compression-filling a mold measuring 400 mm $\times$ 300 mm $\times$ 12 mm with the polyolefin-based pre-expanded particles obtained in Example 4 so that a beads ratio becomes 50%, the pre-expanded particles were heat-fused by steam at 0.3 MPa to obtain an in-mold molded article. The obtained in-mold molded article was dried in a drying chamber at 75°C for 24 hours and aged, and then, an expansion ratio, state of fusion and surface specific resistance of the in-mold molded article were evaluated.

The results are shown in Table 1.

(Comparative Example 2)

In the same manner as in Example 1, except that a polymer type antistatic agent was not added and hydroxyalkyl monoethanolamine (manufactured by MIYOSHI OIL & FAT CO., LTD., trade name "Dusper 125B") as a low-molecular type antistatic agent was used in the amount shown in Table 1, the operation was performed to obtain polyolefin resin pre-expanded particles and an in-mold molded article. The results are shown in Table 1. Herein, the obtained polyolefin resin pre-expanded particles showed an apparent expansion ratio of 16.6.

(Comparative Example 3)

In the same manner as in Example 1, except that a polyether-polypropylene block copolymer (manufactured by 5 Sanyo Chemical Industries, Ltd., trade name "Pellestat 300") as a polymer type antistatic agent and hydroxyalkyl monoethanolamine (manufactured by MIYOSHI OIL & FAT CO., LTD., trade name "Dusper 125B") as a low-molecular type antistatic agent were used in combination as antistatic 10 agents in each amount shown in Table 1, the operation was performed to obtain polyolefin resin pre-expanded particles and an in-mold molded article. The results are shown in Table 1. Herein, the obtained polyolefin resin pre-expanded particles showed an apparent expansion ratio of 15 15.4.

(Comparative Example 4)

In the same manner as in Example 1, except that the polyether-polypropylene block copolymer was replaced by a 20 mixture of polyetheresteramide and polyamide (manufactured by Ciba Specialty Chemicals Inc., trade name "IRGASTAT P18"), the operation was performed to obtain polyolefin resin pre-expanded particles and an in-mold molded article. The results are shown in Table 1. Herein, the obtained 25 polyolefin resin pre-expanded particles showed an apparent expansion ratio of 16.7.

(Comparative Example 5)

In the same manner as in Example 1, except that a mixture of polyetheresteramide and polyamide (manufactured by Ciba Specialty Chemicals Inc., trade name "IRGASTAT P18") and hydroxyalkyl monoethanolamine (manufactured by MIYOSHI OIL & FAT CO., LTD., trade name "Dusper 125B") as a low-molecular type antistatic agent were used in combination as antistatic agents in each amount shown in Table 1, the operation was performed to obtain polyolefin resin pre-expanded particles and an in-mold molded article. The results are shown in Table 1. Herein, the obtained polyolefin resin pre-expanded particles showed an apparent expansion ratio of 16.0.

[Table 1]

| | Polymer type antistatic agent and used amount | | Low-molecular type antistatic agent and used amount | | Evaluation items | | | | | |
|---|---|---|---|---|---|---|---|---|---|---|
| | Kind | Used amount (parts by weight) | Kind | Used amount (parts by weight) | Dispersibility | Expansion ratio of molded article (times) | State of Fusion | Appearance of molded article | Surface specific resistance ($\Omega$) | Over-all evaluation |
| Example 1 | Polyether-polyolefin copolymer (*1) | 5 | None | - | ○ | 24 | ○ | ○ | $1.0 \times 10^{13}$ | ○ |
| Example 2 | Polyether-polyolefin copolymer (*1) | 10 | None | - | ○ | 24 | ○ | ○ | $1.7 \times 10^{12}$ | ○ |
| Example 3 | Polyether-polyolefin copolymer (*2) | 18 | Hydroxyalkyl monoethanolamine (*5) | 0.001 | ○ | 25 | ○ | ○ | $2.0 \times 10^{11}$ | ○ |
| Example 4 | Polyether-polyolefin copolymer (*3) | 10 | None | - | ○ | 29 | ○ | ○ | $2.2 \times 10^{11}$ | ○ |
| Example 5 | Polyether-polyolefin copolymer (*3) | 10 | None | - | ○ | 15 | ○ | ○ | $2.8 \times 10^{10}$ | ○ |
| Comparative Example 1 | Polyether-polyolefin copolymer (*1) | 3 | None | - | ○ | 24 | ○ | ○ | $5.3 \times 10^{13}$ | Δ |
| Comparative Example 2 | None | - | Hydroxyalkyl monoethanolamine (*5) | 0.5 | × | 25 | × | ○ | $1.5 \times 10^{12}$ | × |
| Comparative Example 3 | Polyether-polyolefin copolymer (*1) | 10 | Hydroxyalkyl monoethanolamine (*5) | 0.5 | Δ | 23 | ○ | ○ | $7.8 \times 10^{11}$ | Δ |
| Comparative Example 4 | Polyetheresteramide + polymide (*4) | 10 | None | - | ○ | 25 | × | × | $3.0 \times 10^{12}$ | × |

9

(continued)

| | Polymer type antistatic agent and used amount | | Low-molecular type antistatic agent and used amount | | Evaluation items | | | | | | |
|---|---|---|---|---|---|---|---|---|---|---|---|
| | Kind | Used amount (parts by weight) | Kind | Used amount (parts by weight) | Dispersibility | Expansion ratio of molded article (times) | State of Fusion | Appearance of molded article | Surface specific resistance ($\Omega$) | Over-all evaluation |
| Comparative Example 5 | Polyetheresteramide + polymide (*4) | 10 | Hydroxyalkyl monoethanolamine (*5) | 0.5 | $\Delta$ | 24 | $\times$ | $\times$ | $8.5 \times 10^{11}$ | $\times$ |

*1: manufactured by Sanyo Chemical Industries, Ltd., trade name "Pellestat 300"
*2: manufactured by Sanyo Chemical Industries, Ltd., trade name "Pellestat 230"
*3: manufactured by Sanyo Chemical Industries, Ltd., trade name "Pellestat 303"
*4: manufactured by Ciba Specialty Chemicals Inc., trade name "IRGASTAT P18"
*5: manufactured by MIYOSHI OIL & FAT CO., LTD., trade name "Dusper 125B"

As is apparent from the results shown in Table 1, when an in-mold molded article is obtained by using pre-expanded particles according to examples of the present invention, the obtained molded article shows a satisfactory surface specific resistance value in spite of the amount of a low-molecular type static agent that is less than 0.01 part by weight, and also shows satisfactory state of fusion. It was recognized that the pre-expanded particles of Examples show improved dispersibility when compared with those of comparative examples.

**Claims**

1.   Polyolefin resin pre-expanded particles produced by expanding a polyolefin-based resin particle, wherein the polyolefin-based resin particles are obtained from a polyolefin-based resin composition comprising 100 parts by weight of a polyolefin-based resin, less than 0.01 part by weight of a low-molecular type antistatic agent, and 5 parts by weight or more and 30 parts by weight or less of a polyether-polyolefin resin block copolymer-based antistatic agent.

2.   The polyolefin resin pre-expanded particles according to claim 1, wherein the polyolefin-based resin composition does not substantially contain a low-molecular type antistatic agent.

3.   The polyolefin-based resin pre-expanded particles according to claim 1 or 2, wherein the polyolefin-based resin is a polypropylene-based resin.

4.   The polyolefin resin pre-expanded particles according to any one of claims 1 to 3, wherein the polyether-polyolefin resin block copolymer-based antistatic agent is a polyether-polypropylene-based resin block copolymer.

5.   An expansion-molded article obtained by heat-fusing the polyolefin resin pre-expanded particles according to any one of claims 1 to 4.

**Patentansprüche**

1.   Vorgeschäumte Polyolefinharzteilchen, die durch Schäumen eines Polyolefinbasierten Harzteilchens hergestellt werden, wobei die Polyolefin-basierten Harzteilchen aus einer Polyolefin-basierten Harzzusammensetzung erhalten werden, die 100 Gewichtsanteile eines Polyolefin-basierten Harzes, weniger als 0,01 Gewichtsanteile eines niedermolekularen Antistatikums und 5 Gewichtsanteile oder mehr und 30 Gewichtsanteile oder weniger eines Polyether-Polyolefin-Harz-Block-Copolymerbasierten Antistatikums umfasst.

2.   Vorgeschäumte Polyolefinharzteilchen nach Anspruch 1, wobei die Polyolefinbasierte Harzzusammensetzung im Wesentlichen kein niedermolekulares Antistatikum enthält.

3.   Vorgeschäumte Polyolefin-basierte Harzteilchen nach Anspruch 1 oder 2, wobei das Polyolefin-basierte Harz ein Polypropylen-basiertes Harz ist.

4.   Vorgeschäumte Polyolefinharzteilchen nach einem der Ansprüche 1 bis 3, wobei das Polyether-Polyolefin-Harz-Block-Copolymer-basierte Antistatikum ein Polyether-Polypropylen-basiertes Harz-Block-Copolymer ist.

5.   Verschäumungsformteil, das durch Hitzeschmelzen der vorgeschäumten Polyolefinharzteilchen nach einem der Ansprüche 1 bis 4 erhalten ist.

**Revendications**

1.   Particules pré-expansées de résine de polyoléfine produites par expansion d'une particule de résine à base de polyoléfine, dans lesquelles les particules de résine à base de polyoléfine sont obtenues à partir d'une composition de résine à base de polyoléfine comprenant 100 parties en poids d'une résine à base de polyoléfine, moins de 0,01 partie en poids d'un agent antistatique de type faible masse moléculaire, et 5 parties en poids ou plus et 30 parties en poids ou moins d'un agent antistatique à base de résine de copolymère séquencé polyéther-polyoléfine.

**2.** Particules pré-expansées de résine de polyoléfine selon la revendication 1, dans lesquelles la composition de résine à base de polyoléfine ne contient pratiquement pas d'agent antistatique de type faible masse moléculaire.

**3.** Particules pré-expansées de résine à base de polyoléfine selon la revendication 1 ou 2, dans lesquelles la résine à base de poly-oléfine est une résine à base de polypropylène.

**4.** Particules pré-expansées de résine de polyoléfine selon l'une quelconque des revendications 1 à 3, dans lesquelles l'agent antistatique à base de résine de copolymère séquencé polyéther-polyoléfine est un copolymère séquencé de type résine à base de polyéther-polypropylène.

**5.** Article moulé par expansion obtenu par thermofusion des particules pré-expansées de résine de polyoléfine selon l'une quelconque des revendications 1 à 4.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10219019 A
- JP 2000290421 A
- JP 2002003634 A